Europäisches Patentamt

European Patent Office

Office européen des brevets

(19)

(11) **EP 1 643 496 A2**

(12) **EUROPEAN PATENT APPLICATION**

(43) Date of publication:
05.04.2006 Bulletin 2006/14

(51) Int Cl.:
*G11B 7/09* (2006.01)

(21) Application number: 05108535.5

(22) Date of filing: 16.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2004 JP 2004289351**

(71) Applicant: **KABUSHIKI KAISHA TOSHIBA
Tokyo 105-8001 (JP)**

(72) Inventors:
• **Kuroda, Kazuto**
  **105-8001, Tokyo (JP)**
• **Higashiyama, Yasushi**
  **105-8001, Tokyo (JP)**
• **Sato, Hiroharu**
  **105-8001, Tokyo (JP)**

(74) Representative: **Henkel, Feiler & Hänzel
Möhlstrasse 37
81675 München (DE)**

(54) **Optical disk apparatus and photodetection signal processing method**

(57)　An optical disk apparatus of the invention includes an optical pickup (110) which irradiates an optical disk with a laser beam, a light-reception unit including a first light-reception element and a second light-reception element, the light-reception unit receiving the laser beam reflected from the optical disk to provide a first photodetection signal and a second photodetection signal corresponding to the reflected laser beam, measuring units (400, 500) which receive the first and second photodetection signals from the optical pickup to measure propagation delay time difference between the first and second photodetection signals, a delay unit (600) which delays the first and second photodetection signals based on the signal propagation delay time difference such that delay times of the first and second photodetection signals are equalized to each other, and a signal processing circuit (114) which processes the first and second photodetection signals delayed by the delay unit, and provides the processed signals.

FIG. 1A

EP 1 643 496 A2

114

FIG. 1B

## Description

The present invention relates to an optical disk apparatus which records information in and reproduces information from an optical disk.

In the optical disk apparatus, in order that a laser beam correctly traces a track in which pits indicating information are arrange on the optical disk, it is necessary that a tracking signal is generated to perform tracking servo. In the tracking servo, position control of an optical pickup device is performed in a disk radial direction based on the tracking signal.

The laser beam reflected from the optical disk is received by a divided light-reception unit including plural light-reception elements, and each light-reception element generates a photodetection signal. A tracking error signal generating circuit generates a tracking error signal with the photodetection signals.

Recently a tracking error detection method, in which the tracking error signal is detected from phase difference between output signals of the divided light-reception unit, is widely adopted in the optical disk apparatus.

Jpn. Pat. Appln. KOKAI Publication No. 2002-237062 (paragraph No. 0032 and FIG. 13) discloses a technology in which, in the phase error detection type of tracking error detection method, a delay element is placed at the front of a phase comparison unit which compares the phase differences, and the phase comparison result is offset to suppress the deterioration of phase difference detection sensitivity under the conditions of high density and high linear velocity.

However, in the configuration disclosed in Jpn. Pat. Appln. KOKAI Publication No. 2002-237062, there is a problem that the tracking error signal generating circuit is easily affected by transmission characteristics difference, caused by the difference in wiring length from the divided light-reception unit to the tracking error signal generating circuit or arrangement difference, as information recording density is increased. The technology disclosed in Jpn. Pat. Appln. KOKAI Publication No. 2002-237062 has no consideration about signal delay amount difference generated by the wiring length difference from the photodetection unit to the phase error detection circuit.

In the actual optical disk apparatus, a pickup head on which the divided light-reception unit is mounted is separated from a portion on which the tracking error signal generating circuit is mounted, and the pickup head and the portion are connected to each other with a connection cable. Due to restriction of component arrangement on a circuit board, the light-reception elements constituting the divided light-reception unit differ from one another in the wiring length from the divided light-reception unit to the tracking error signal generating circuit. Therefore, the wiring transmission characteristics do not coincide with one another. For example, in the case where delay times do not coincide with one another, the times when photodetection signals from the light-reception elements reach the tracking error signal generating circuits differ from one another.

Accordingly, because the phase differences between the photodetection signals of the light-reception elements are affected by arrival time difference, in the tracking error signal generating circuit, propagation time difference caused by group delay characteristics (signal transmission characteristics) is also simultaneously observed in addition to the phase difference in photodetection signal.

According to armchair computation, in a system having a channel bit rate of 64.8 Mbps, the delay-time difference which generates an error corresponding to 0.3% of the maximum amplitude of the tracking error signal is 46.3 ps which corresponds to the difference of about 1 cm in terms of wiring length. When ten-time high-speed reproduction is performed, the same wiring length difference becomes 3% of the tracking error, and it is no longer ignorable.

Further, because the difference is also generated by bending of the wiring or relationship between close wiring lines in the group delay characteristics, it is thought that the propagation time difference larger than the propagation time difference simply caused by the wiring length difference is generated between the light-reception elements and the tracking error signal generating circuit.

In this case, because the error included in the tracking error signal is further increased, it is difficult that track servo is correctly performed without considering the tracking error signal difference generated by the delay time difference. Accordingly, it is difficult to use the method of eliminating the influence of the generated error by actually performing the track servo to adjust an offset amount of servo like the technology disclosed in Jpn. Pat. Appln. KOKAI Publication No. 2002-237062.

In view of the foregoing, an object of the invention is to obtain a high-quality reproduction signal even in the high bit rate by compensating the transmission characteristics generated by the difference between wiring lengths from the light-reception element to the signal processing circuit such as the tracking error signal generating circuit and an RF signal processing circuit.

In order to achieve the above object, an optical disk apparatus according to one embodiment of the present invention comprises: an optical pickup 110 which irradiates an optical disk with a laser beam, a light-reception unit including a first light-reception element and a second light-reception element, the light-reception unit receiving the laser beam reflected from the optical disk to provide a first photodetection signal and a second photodetection signal corresponding to the reflected laser beam; measuring units 400 and 500 which receive the first and second photodetection signals from the optical pickup to measure propagation delay time difference between the first and second photodetection signals; a delay unit 600 which delays the first and second photodetection signals based on the signal propagation delay time difference such that delay times of the first and second photodetection signals are equalized to each other; and a signal processing circuit 114 which processes the first and second photodetection signals delayed by the delay unit, and provides the processed signals.

According to an embodiment of the invention, by providing the circuit which compensates the signal delay amount difference generated by the difference in wiring lengths from the light-reception element to the phase error detection circuit, which is conventionally ignorable, the track servo can stably be performed by the tracking error detection method such as the phase error detection method even in the optical disk apparatus in which the high density and high linear velocity are achieved.

This summary of the invention does not necessarily describe all necessary features so that the invention may also be a sub-combination of these described features.

The invention can be more fully understood from the following detailed description when taken in conjunction with the accompanying drawings, in which:

FIG. 1A shows a configuration of an optical disk apparatus according to a first embodiment of the invention;
FIG. 1B shows a configuration of a tracking error generating circuit 114;
FIG. 2A shows a configuration of a detector 400A;
FIG. 2B shows a configuration of a detector 400B;
FIG. 2C shows a configuration of a detector 400C;
FIG. 3A shows a configuration of a time measuring instrument 440A;
FIG. 3B shows a configuration of a time measuring instrument 440B;
FIG. 4 shows an example of a signal generator 250;
FIG. 5A shows a delay-time variable circuit 610;
FIG. 5B shows a delay-time variable circuit 630;
FIG. 5C shows a delay-time variable circuit 650;
FIG. 5D shows a delay-time variable circuit 660;
FIG. 6 shows a tracking error signal generating circuit according to a second embodiment of the invention;
FIG. 7 shows a tracking error signal generating circuit according to a fourth embodiment of the invention;
FIG. 8 shows an RF signal compensating circuit according to a fifth embodiment of the invention;
FIG. 9A shows a configuration of an equalization amount computing unit 900A; and
FIG. 9B shows a configuration of an equalization amount computing unit 900B.

Embodiments of the invention will be described with reference to the accompanying drawings.

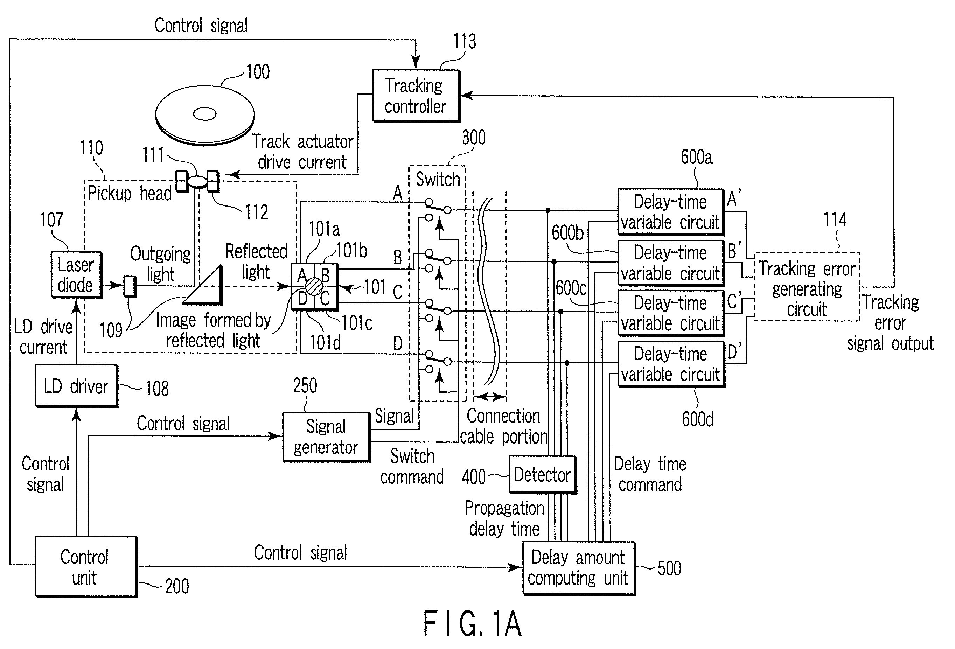

FIG. 1A is a block diagram showing a configuration of an optical disk apparatus according to a first embodiment of the invention.

A laser beam emitted from a laser diode (LD) 107 passes through optical elements 109, and an optical disk 100 is irradiated with the laser beam. The laser beam reflected from the optical disk 100 passes through the optical elements 109 again, and a divided light-reception unit 101 is irradiated with the reflected laser beam. The LD 107 is driven by an LD driver 108 which is controlled by a control unit 200.

A pickup head 110 includes the divided light-reception unit 101, the LD 107, the optical elements 109, an objective lens 111, and a track actuator 112. The divided light-reception unit 101 is arranged in an optical path of the reflected laser beam, which is generated in irradiating the optical disk with the laser beam, in the vicinity of an information track in the optical disk (information storage medium) 100.

The divided light-reception unit 101 is divided by parting lines orthogonal to each other, and the divided light-reception unit 101 includes light-reception elements 101a to 101d. The optical disk 100 is rotated at a constant speed, the laser beam reflected from the optical disk 100 is modulated by information pits formed in the information track, the light-reception elements 101a to 101d receive the reflected laser beam, and electric signals corresponding to the reflected laser beam are outputted as photodetection signals A to D.

The photodetection signals A to D outputted from the light-reception elements 101a to 101d are transmitted to a tracking error signal generating circuit 114 through a switch 300 arranged near the light-reception element 101, a connection cable, and delay-time variable circuits 600a to 600d. As mentioned later, the delay-time variable circuits 600a to 600d cause propagation delay times from the light reception elements 101a to 101d to the tracking error signal generating circuit 114 to coincide with one another, and the delay-time variable circuits 600a to 600d output photodetection signals A' to D' respectively.

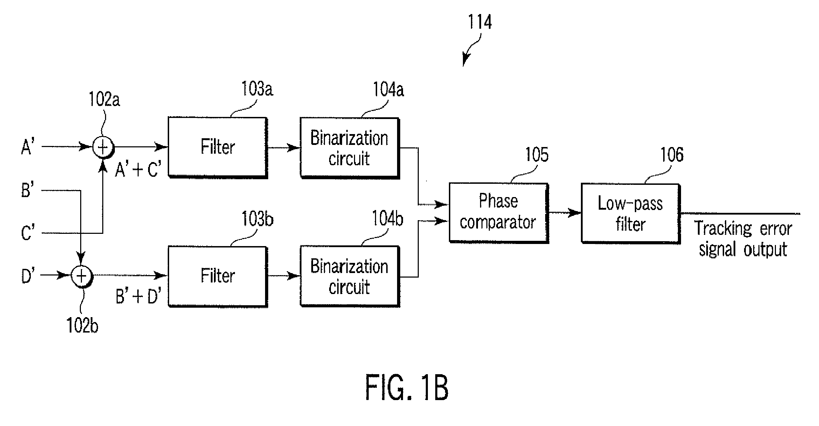

FIG. 1B is a block diagram showing a configuration of the tracking error generating circuit 114.

The output A' and C' of the diagonally located light-reception elements 101a and 101c are added by an adder 102a, and the output B' and D' of the diagonally located light-reception elements 101b and 101d are added by an adder 102b, which generates A'+C' output and B'+D' output. The reference numerals 103a and 103b designate a high-pass filter or a band-pass filter, and the filters 103a and 103b remove a direct-current component and a noise component from the diagonal sum outputs, i.e. the (A'+C') output and the (B'+D') output.

The numerals 104a and 104b designate a binarization circuit, and the binarization circuits 104a and 104b convert the signals passing through the filters 103a and 103b into binary signals with threshold values respectively. The numeral 105 designates a phase comparator, and the phase comparator 105 detects phase difference between these pulse signals to output the phase difference as the electric signal.

The numeral 106 designates a low-pass filter, and the low-pass filter 106 removes the noise component from the electric signal to output the electric signal as a tracking error signal. The tracking error signal generating circuit 114 is composed of the adders 102a and 102b, the filters 103a and 103b the binarization circuits 104a and 104b, the phase comparator 105 and the low-pass filter 106.

As shown in FIG. 1A, the tracking error signal is converted into track actuator drive current by computation of a tracking controller 113. The control unit 200 controls the tracking controller 113, and the tracking controller 113 receives action ON and OFF commands, parameter commands, and the like from the control unit 200.

The track actuator 112 is driven to move the objective lens 111 by the track actuator drive current, which allows a focal point of the objective lens 111 to be maintained in the center of the information track of the optical disk (information storage medium) 100. The action in which the focal point of the objective lens 111 is maintained in the center of the information track (center of a track width) of the optical disk 100 by moving the objective lens 111 is referred to as track servo.

Then, adjustment of a delay amount of the photodetection signal according to the first embodiment will be described.

Conventionally, it is thought that a difference in signal delay amount generated by a difference in wiring length from the photo detection unit to the phase error detection circuit is negligible. However, the difference in signal delay amount becomes considerable because density of the optical disk is increased and linear velocity is increased in the recording and reproduction of the optical disk by the optical disk apparatus. The difference in signal delay amount generates a difference in time in which the photodetection signal reaches the tracking error generating circuit, which causes distortion in the tracking error signal generated in the tracking error generating circuit. As a result, tracking controls becomes unstable.

In the first embodiment, for example the four signal delay amounts of the photodetection signals from the light-reception elements to the tracking error generating circuit are caused to coincide with one another, which allows the tracking error signal with no distortion to be generated in the tracking error generating circuit. As a result, the track servo can stably be performed.

In FIG. 1A, in order to cause the propagation delay times from the light-reception elements 101a to 101d to the tracking error signal generating circuit 114 to coincide with one another, the following processes are performed before starting the reproduction of the optical disk 100.

The differences in propagation time between the light-reception elements 101a to 101d and the switch 300 and the differences in signal propagation time from a detector 400 to the tracking error signal generating circuit 114 through the delay-time variable circuits 600a to 600d should be ignorable when compared with the difference in propagation time from the switch 300 to the detector 400.

(a1) Before starting the information reproduction of the optical disk 100, the control unit 200 changes the input of the switch 300 to a signal generator 250.

(a2) The signal generator 250 simultaneously outputs measurement signals to signal lines corresponding to the light-reception elements 101a to 101d. The measurement signal has a waveform, such as a pulse wave, a sweep wave, and a pseudo-noise signal, in which the time difference can be specified.

(a3) The detector 400 receives the signal outputted from the signal generator 250, and the detector 400 outputs the detected timing to a delay amount computing unit 500.

(a4) The delay amount computing unit 500 measures the time differences in detected timing. The delay amount computing unit 500 computes the times to be delayed such that the delay times of other signal lines coincide with the delay time of the signal line through which the photodetection signal of latest arrival is transmitted, and the delay amount computing unit 500 outputs delay-time command values to the delay-time variable circuits 600a to 600d. The delay-time command value, which is outputted to the delay-time variable circuit connected to the signal line of the latest-arrival photodetection signal, becomes the shortest delay time (zero or more) when compared with the delay-time command values outputted to other delay-time variable circuits.

(a5) When the delay time setting is finished, the control unit 200 changes the switch 300 from the signal generator 250 to the divided light-reception unit 101 side.

The signal propagation delay times from the light-reception elements 101a to 101d to the tracking error signal generating circuit 114 can be caused to coincide with one another through the above operations. For example, the delay time command value is nano-seconds, and action response speed of the tracking actuator 112 is milli-seconds. Accordingly, action delay of the tracking actuator 112, caused by the signal delay of the delay-time variable circuit, is ignorable.

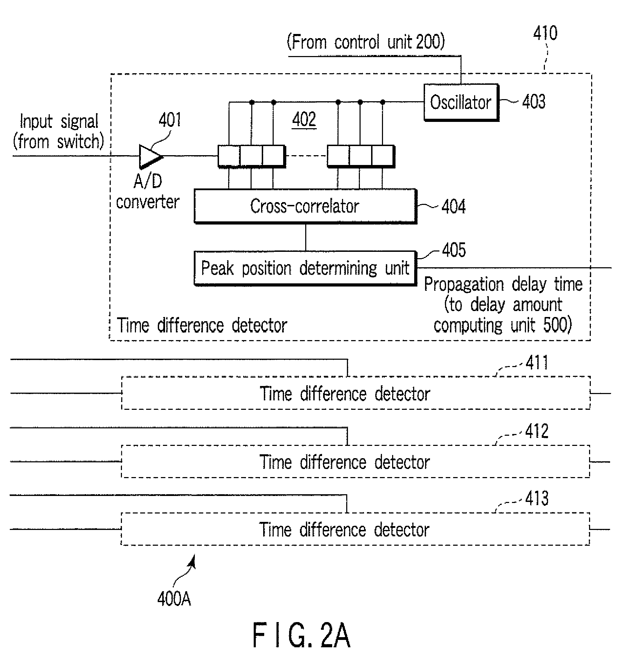

FIGS. 2A to 2C show configuration examples of the detector 400 of FIG. 1A.

FIG. 2A shows a detector 400A as a configuration example of the detector 400. The detector 400A includes time difference detectors 410 to 413 having the same configuration. The time difference detector 410 will be described below.

The input signal is inputted to an A/D converter 401. The A/D converter 401 converts an analog signal into a multi-level digital signal including a binary. The output of the A/D converter 401 is inputted to a shift register 402.

Portions (registers) which latch the numerical value of the number of same bits as the A/D converter 401 are cascaded in the shift register 402. The shift register 402 sequentially transfers the latched numerical value by an external timing signal. The timing signal for transmitting the numerical value at constant intervals is inputted from an oscillator 403 to the shift register 402, and the shift register 402 transfers the numerical value to the next-stage register at constant intervals.

Under the control of the control unit 200 of FIG. 1A, the shift register 402 starts the transfer of the numerical value among the registers at the same time when the signal generator 250 starts the signal generation. Alternatively, it is possible that the four signals transmitted from the switch 300 are binarized respectively and the shift register 402 starts the transfer when the binarized signal is inputted to any one of the delay-time variable circuits. The former can obtain the delay times of the signals generated from the signal generator 250, and the latter can obtain the delay time differences between the signals. Accordingly, the shift register 402 can delay the output of the A/D converter 401 by "the number of registers through which the numerical value passes $\times$ time of constant period."

On the other hand, the output signals of the registers are inputted to a cross-correlator 404. Ideal waveform information generated by the signal generator 250 is stored in the cross-correlator 404. The cross-correlator 404 performs convolution computation in a time range between the ideal waveform information and the actually received waveform outputted from the shift register 402 to compute the cross-correlation.

There is a strong correlation between the actually received waveform and the ideal waveform. In sequentially shifting the ideal waveform in terms of time by the shift register, the cross-correlator 404 outputs the information that the strongest correlation is obtained between the ideal waveform and the actually received waveform when how much the ideal waveform is shifted. The correlation can be expressed by the following formula 1.

Assuming that the A/D conversion sample values latched in the shift register in which the n-stage registers are connected are $x_N$ (N=1, 2, 3, ..., n) and the pieces of digitized ideal waveform information stored in the cross-correlator 404 are $y_N$ (N=1, 2, 3, ..., n), the cross-correlator 404 performs the following computation.

$$C(k) = \frac{1}{n-m} \sum_{i}^{n-m} x_i \cdot y_{i+k} \qquad \left(k = 1,2,3,\ldots,m\right)$$

where m is a natural number indicating a sample range in which the correlation is considered, and m is smaller than n. The cross-correlator 404 outputs k which is a natural number when the largest value of C(k) is indicated.

As a result of the computation by the cross-correlator 404, the number of shift times of the ideal waveform "k" indicating the strongest correlation shows existence of the delay time of "k $\times$ shift register transfer periods." This information is outputted as the propagation delay time. In this case, the configuration in which the shift register is used is described. However, the same configuration can be formed with a memory.

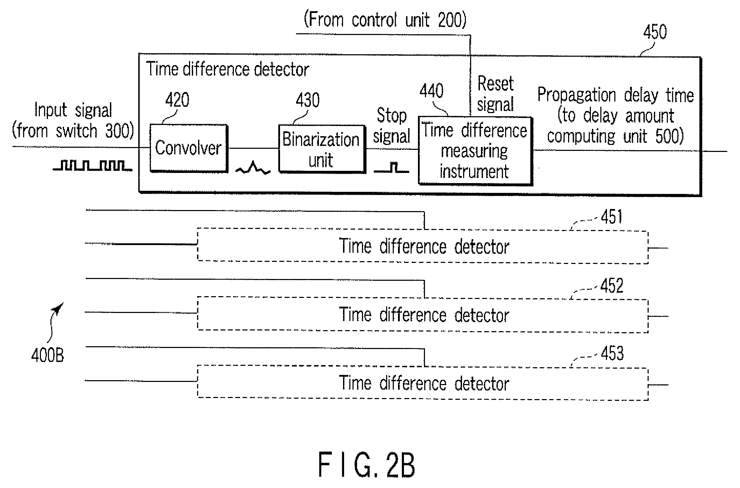

FIG. 2B shows a detector 400B as a configuration example of the detector 400 of FIG. 1A. The detector 400B includes time difference detectors 450 to 453 having the same configuration. The time difference detector 450 will be described below.

The input signal is inputted to a convolver 420. The convolver 420 has an internal structure in which the binary ideal waveform information is stored, and the convolver 420 is an element which can detect a cross-correlation between the ideal waveform information and the input signal. A SAW convolver in which characteristics of a surface acoustic wave is utilized can be cited as the representative convolver The convolver 420 outputs a sharp peak when the waveform which coincides with the waveform information stored in the convolver 420 is inputted.

The control unit 200 notifies a time difference measuring instrument 440 of the timing in which the waveform is generated by the signal generator 250, and the time difference measuring instrument 440 is internally reset to start time measurement. A binarization unit 430 detects a peak of the output from the convolver 420, and the time difference measuring instrument 440 stops the measurement when the peak is detected. Alternatively, it is possible that the four input signals to the time difference detectors 450 to 453 are binarized respectively and the time measurement is started when the binarized signal is initially detected by any one of the time difference detectors. The former can obtain the delay times of the signals generated from the signal generator 250, and the latter can obtain the delay time differences between the signals. The time difference measuring instrument 440 outputs the measured time information as propagation delay time.

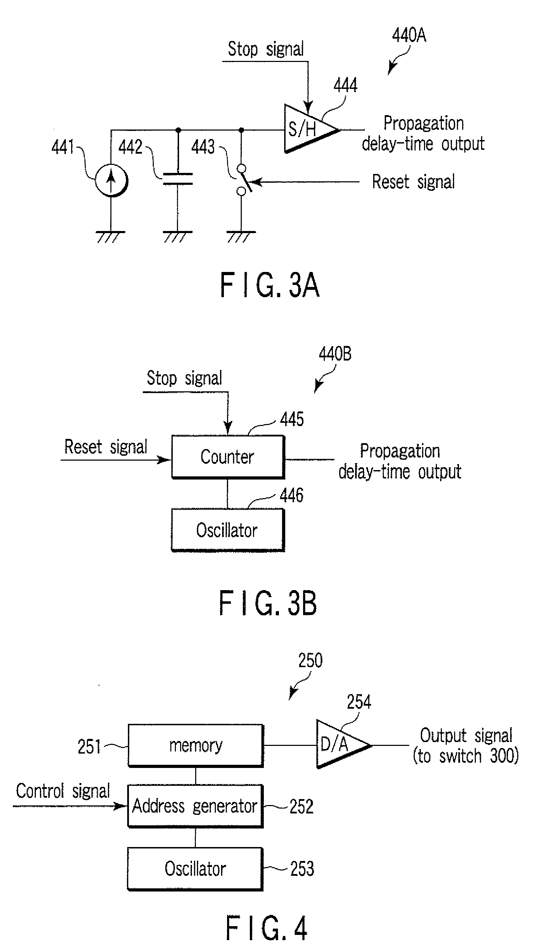

FIGS. 3A and 3B show configuration examples of the time difference measuring instrument 440 of FIG. 2B respectively.

FIG. 3A shows a time measuring instrument 440A as a configuration example of the time measuring instrument 440. A reset signal opens a switch 443 connected in parallel with a capacitor 442. Because the capacitor 442 is connected to a constant current source 441, once the switch 443 is opened, voltage proportional to the time is generated in the capacitor 442.

While a sample hold 444 holds the voltage generated in the capacitor 442 at that time by a stop signal, the switch 443 is closed to discharge charge accumulated in the capacitor 442. The voltage of the sample hold 444 becomes the information proportional to the measured delay time. In the case of the circuit configuration in which the voltage of the capacitor 442 becomes an initial state by the reset signal and voltage change emerges in the capacitor 442 in proportion to the elapsed time by the stop signal, other configurations can be adopted in addition to the above configuration.

FIG. 3B shows a time measuring instrument 440B as another configuration example of the time measuring instrument 440 of FIG. 2B. An oscillator 456 outputs a clock signal having a constant period. The clock signal, the reset signal, and the stop signal are inputted to a counter 445. The counter 445 resets the stored numerical value to zero by the reset signal, and the counter 445 starts counting the inputted clock when the reset signal is released.

The counter 445 stops the increase in numerical value in synchronization with the input clock by the stop signal. The numerical value which the counter stored at the stop time is the numerical value which is proportional to the measurement time, and the counter 445 outputs the numerical value as time information.

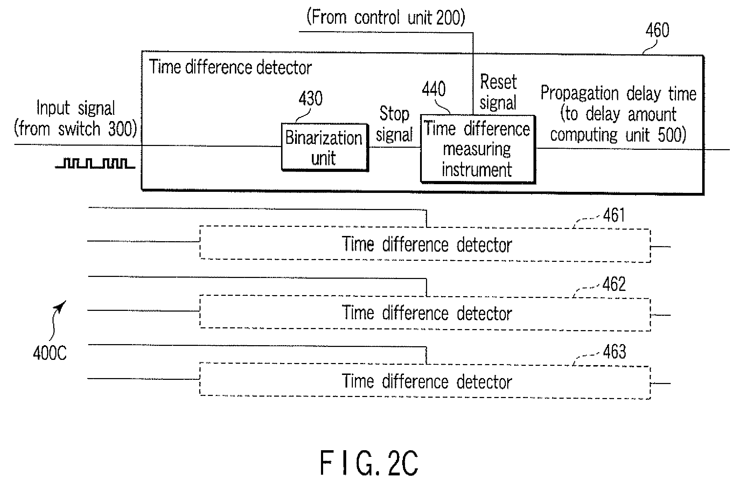

Returning to the configuration of the detector 400, FIG. 2C shows a detector 400C as another configuration example of the detector 400 of FIG. 1A. The detector 400C includes time difference detectors 460 to 463 having the same configuration. The time difference detector 460 will be described below.

The binarization unit 430 binarizes the input signal with a predetermined threshold value. The time difference measuring instrument 440 has the same configuration as the time difference measuring instrument 440 of FIG. 2B. The control unit 200 notifies the time difference measuring instrument 440 of the timing in which the waveform is generated by the signal generator 250, and the time difference measuring instrument 440 is internally reset to start the time measurement. The binarization unit 430 detects oncoming of the input signal, and the time difference measuring instrument 440 stops the measurement when the stop signal is supplied. Alternatively, it is possible that the four input signals to the time difference detectors 460 to 463 are binarized respectively and the time measurement is simultaneously started when the binarized signal is inputted to any one of the time difference detectors. The former can obtain the delay times of the signals generated from the signal generator 250, and the latter can obtain the delay time differences between the signals. The time difference measuring instrument 440 outputs the measured time information as propagation delay time.

Then, the configuration of the delay amount computing unit 500 of FIG. 1A will be described.

Assuming that the propagation delay times which are measured by the detector 400 and inputted from the four signal lines a, b, c, and d are $T_a$, $T_b$, $T_c$, and $T_d$ (where $T_a$, $T_b$, $T_c$, and $T_d$ are all larger than zero), the delay amount computing unit 500 outputs delay-time command values $T_{Ra}$, $T_{Rb}$, $T_{Rc}$, and $T_{Rd}$ which are expressed by the following formula 2 to the delay-time variable circuits 600a to 600d. At this point, $\min(\alpha, \beta, \chi, \delta)$ should be a function which outputs the smallest numerical value among $\alpha$, $\beta$, $\chi$, and $\delta$.

$$T_{Ra} = T_a - \min(T_a, T_b, T_c, T_d)$$

$$T_{Rb} = T_b - \min(T_a, T_b, T_c, T_d)$$

$$T_{Rc} = T_c - \min(T_a, T_b, T_c, T_d)$$

$$T_{Rd} = T_d - \min(T_a, T_b, T_c, T_d)$$

Returning to FIG. 1A, the signal generator 250 includes an oscillator which can start and stop oscillation according to the control signal from the control unit 200. In the case where the detector 400 has the configurations shown in FIGS. 2A and 2B, a chirp signal in which an oscillation frequency is changed from a low frequency to a high frequency, a pseudo-random signal, an impulse signal, and the like are suitable for the output of the oscillator. In the case where the detector 400 has the configuration shown in FIG. 2C, a sine wave, a square wave, and the like are preferable.

FIG. 4 shows a configuration example of the signal generator 250. The signal generator 250 includes an oscillator 253, a memory 251 in which the digitized waveform information is stored, an address generator 252 which generates an address of the memory 251, and a D/A converter 254 which converts the digital waveform information read from the memory 251 into the analog signal. The address generator 252 generates an address signal, synchronized with the clock signal from the oscillator 253, according to the control signal from the control unit 200 to read the waveform information stored in the memory 251. Also, the address generator 252 stops the address signal generation according to the control signal from the control unit 200.

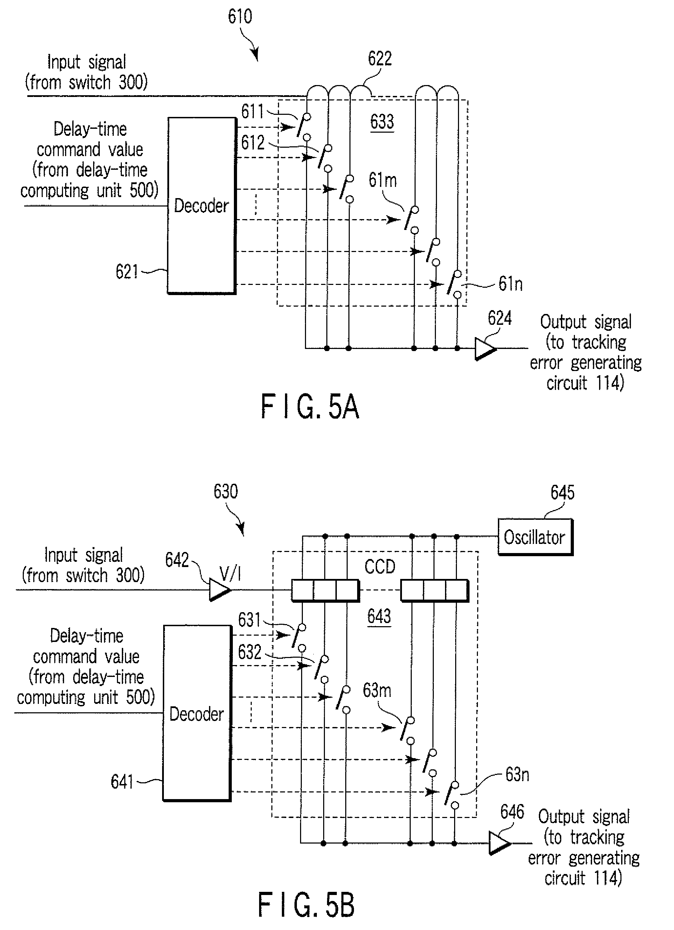

FIGS. 5A to 5C show configuration examples of the delay-time variable circuits 600a to 600d of FIG. 1A. Because the delay-time variable circuits 600a to 600d have the same configuration, FIGS. 5A to 5C show one circuit in the delay-time variable circuits 600a to 600d.

FIG. 5A shows a delay-time variable circuit 610 as a configuration example of the delay-time variable circuit. The input signal is inputted to a delay line 622. Plural terminals from which the output at the mid point can be taken out are provided in the delay line 622, and the terminals are connected to plural switches 611, 612, ..., 61n respectively. In order that the input signal passes through the delay line 622, a predetermined propagation time is required. Accordingly, when the output is taken out at an arbitrary point in the delay line 622, the signal can arbitrarily be delayed within the propagation time range of the delay line 622.

A decoder 621 decodes the inputted delay-time command value, and the delay-time command value causes the switch 61m to be in the connected state and causes other switches to be in the disconnected state. The switch 61m is connected to the terminal of the delay line 622, which corresponds to the delay time closest to the inputted delay-time command value. Therefore, the signal is obtained within the propagation time range of the delay line 622, and the signal is outputted from an amplifier 624.

FIG. 5B shows a delay-time variable circuit 630 as another configuration example of the delay-time variable circuit of FIG. 1A. A voltage-current converter (V/I) 642 converts the input signal into current change proportional to voltage change of the input signal, and the current change is inputted to a charge coupled device (CCD) 643. The CCD 643 is the device in which charge accumulation portions are cascaded, and in which the accumulated charge can sequentially be transferred to the next-stage charge accumulation portion by the external timing signal.

The timing signal for transmitting the charge at constant intervals is inputted from an oscillator 645 to the CCD 643, and the CCD 643 transfers the charge to the next-stage charge accumulation portion at constant intervals. Since the charge transfer is generated at constant intervals, the charge is accumulated in proportion to the current from the voltage-current converter 642 in the charge accumulation portion connected to the voltage-current converter 642, and the accumulated charge is transferred to the next-stage charge accumulation portion. Switches 631, 632, ..., 63n are provided in the charge accumulation portions respectively. The charge flows into a charge amplifier 646 from the charge accumulation portion connected to the switch 63m which becomes the connected state, and the charge amplifier outputs the voltage in proportion to the charge amount.

The charge transfer to the next-stage charge accumulation portion means that the charge is accumulated and delayed, so that an arbitrary delay amount can be obtained when an arbitrary element is selected from the cascade-connected elements to take out the charge.

A decoder 641 decodes the inputted delay-time command value, and the delay-time command value causes the switch 63m to be in the connected state and causes other switches to be in the disconnected state. The switch 63m is connected to the charge accumulation portion, which corresponds to the delay time closest to the inputted delay-time command value. Therefore, the charge flows into the charge amplifier 646 from the charge accumulation portion through the switch 63m which is selected by the decoder 641, and the output signal in which the input signal is delayed by the inputted delay-time command value can be obtained.

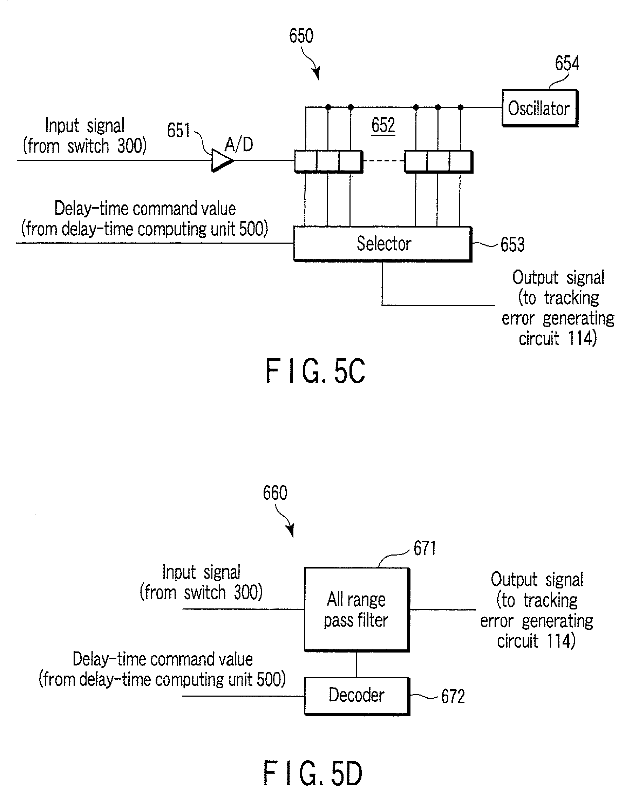

FIG. 5C shows a delay-time variable circuit 650 as another configuration example of the delay-time variable circuit of FIG. 1A. The input signal is inputted to an A/D converter 651. The A/D converter 651 converts the analog signal into the multi-level digital signal including the binary. The output of the A/D converter 651 is inputted to a shift register 652. The portions (registers) which latch the numerical value are cascaded in the shift register 652. The shift register 652 sequentially transfers the latched numerical value by the external timing signal.

An oscillator 654 inputs clocks to the registers at constant intervals, and the numerical value is transferred to the next-stage register at constant intervals. Accordingly, the shift register 652 can delay the output of the A/D converter 651 by "the number of registers through which the numerical value passes $\times$ constant time interval".

The registers are also independently connected to a selector 653, so that the latched numerical value can be read from an arbitrary cascade-connected register. The selector 653 decodes the inputted delay-time command value, and the selector 653 selects the output of the register corresponding to the delay time closest to the delay-time command value to obtain the A/D conversion result in which the output is delayed by an arbitrary time. In this case, the configuration in which the shift register is used is described. However, the same configuration can be formed with the memory.

FIG. 5D shows a delay-time variable circuit 660 as another configuration example of the delay-time variable circuit. The input signal is inputted to an all range pass filter (all pass filter) 671. The all range pass filter 671 is one in which amplitude transmission characteristics are not changed independently of the frequency, and the all range pass filter 671 can change a group delay amount by controlling a characteristic frequency of the filter.

A decoder 672 converts the delay amount command value into the signal which controls the characteristic frequency of the filter, and the signal is inputted to the all range pass filter 671.

As described above, in the first embodiment, the propagation delay times from the light-reception elements 101a to 101d to the tracking error signal generating circuit 114 are caused to coincide with one another. Therefore, the phase difference signal caused by the propagation time difference is not generated in the phase comparator 105 in the tracking error signal generating circuit 114, which allows the distortion (error) of the tracking error signal caused by the propagation time difference to be suppressed. Accordingly, the track servo can stably be performed to obtain the high-quality reproduction signal even in the high bit rate. The above descriptions show the examples in which the invention is applied to the DPD tracking method. In the DPD tracking method, the tracking error signal is generated based on the phase difference between the photodetection signals. However, the invention can also be applied to a PP tracking method in which the tracking error signal is generated based on an amplitude difference between the photodetection signals outputted from the photo detection units. In the case of the PP tracking method, two-divided photo detector unit can be used.

Then, a second embodiment of the invention will be described.

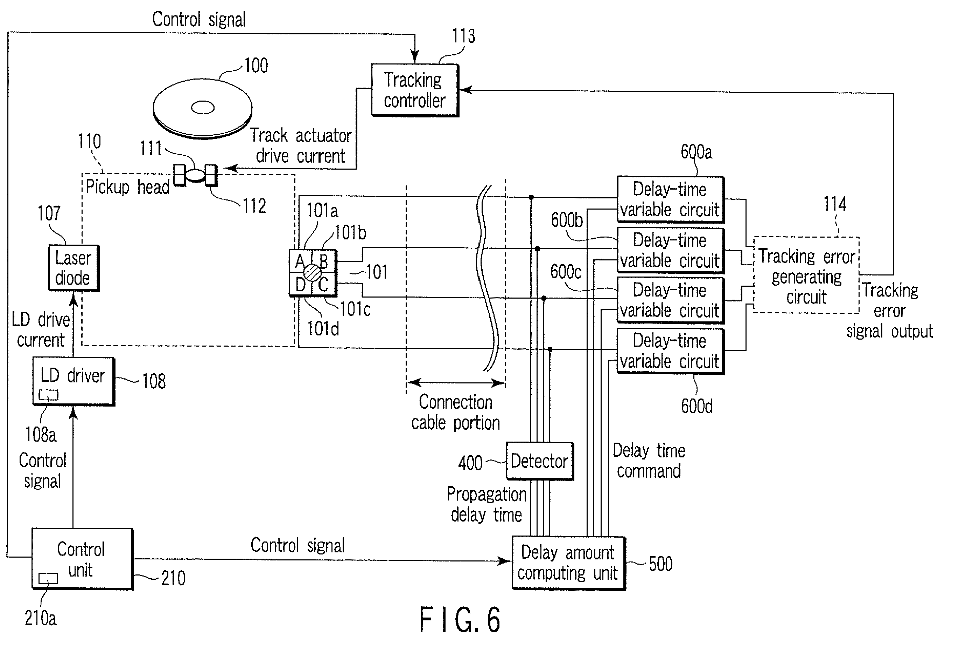

FIG. 6 is a block diagram showing a tracking error signal generating circuit according to the second embodiment of the invention. In FIG. 6, the same component as FIG. 1A (first embodiment) is indicated by the same name and the same reference numeral, so that the description will be omitted. The switch is not required on the light-reception side in the second embodiment, while the switch is required on the light-reception side in the first embodiment.

As described in the first embodiment, an LD 107 is driven by an LD driver 108 which is controlled by a control unit 210.

Generally, in the optical disk apparatus, the so-called high-frequency superposition method in which the frequency sufficiently higher than that of the target reproduction signal is superposed to the drive current of the LD 107 is adopted in order to decrease the noise included in the laser beam of the LD 107. Because the superposed frequency is sufficiently higher than the frequency which can be detected in the signal processing performed to a divided light-reception unit 101 and its output, the superposed frequency does not affect the information reproduction process of an optical disk 100.

A high-frequency superposing unit 108a of the LD driver 108 performs the high-frequency superposition, and the control unit 210 can set the frequency of the superposition.

In the second embodiment, in order to cause the propagation delay times from light-reception elements 101a to 101d to a tracking error signal generating circuit 114 to coincide with one another, before starting the reproduction of the optical disk 100, the following processes are performed while the laser beam is focused on a mirror surface portion on the optical disk 100 by the focusing control.

(b1) The control unit 210 controls the LD driver 108 to decrease the frequency of the high-frequency superposition to an extent in which the frequency can be received by the divided light-reception unit 101.

(b2) The light-reception elements 101a to 101d output the photodetection signals to the corresponding signal lines respectively.

(b3) A detector 400 receives the photodetection signal outputted from the divided light-reception unit 101, and outputs the detected timing to a delay amount computing unit 500.

(b4) The delay amount computing unit 500 measures the time differences in the detected timing. The delay amount computing unit 500 computes the times to be delayed such that the delay times of other signal lines coincide with the delay time of the signal line through which the photodetection signal of latest arrival is transmitted. The delay amount computing unit 500 outputs the computation result as the delay-time command values to delay-time variable circuits 600a to 600d. The delay-time command value, which is outputted to the delay-time variable circuit connected to the signal line of the latest-arrival photodetection signal, becomes the shortest delay time (zero or more) when compared with the delay-time command values outputted to other delay-time variable circuits.

(b5) When the delay time setting is finished, the control unit 210 controls the LD driver 108 to return the frequency of the high-frequency superposition to the predetermined frequency in the reproduction. Namely, the frequency of the high-frequency superposition is set at the frequency sufficiently higher than the frequency which can be detected by the divided light-reception unit 101 and the subsequent processes.

The signal propagation delay times from the light-reception elements 101a to 101d to the tracking error signal generating circuit 114 can be caused to coincide with one another through the above operations. In the second embodiment, it is not necessary that the switch and the signal generator are arranged directly behind the divided light-reception unit 101. Therefore, the system configuration is simplified when compared with the first embodiment.

The propagation delay times from the light-reception elements 101a to 101d to the tracking error signal generating circuit 114 are caused to coincide with one another. Therefore, the phase difference signal caused by the propagation time difference is not generated in a phase comparator 105 in the tracking error signal generating circuit 114, which allows the distortion of the tracking error signal caused by the propagation time difference to be suppressed. Accordingly, the track servo can stably be performed to obtain the high-quality reproduction signal even in the high bit rate.

Then, a third embodiment of the invention will be described. In the third embodiment, an LD outgoing power is modulated.

FIG. 6 is a block diagram showing a tracking error signal generating circuit according to the third embodiment of the invention. Since the third embodiment has the same configuration as the second embodiment, the detailed description of each constituent will be omitted.

In the third embodiment, in order to cause the propagation delay times from light-reception elements 101a to 101d to a tracking error signal generating circuit 114 to coincide with one another, before starting the reproduction of an optical disk 100, the following processes are performed while the laser beam is focused on a mirror surface portion on the optical disk 100 by the focusing control.

(c1) A control unit 210 controls an LD driver 108 to modulate the laser beam outgoing from an LD 107 into the signal of the waveform, such as the pulse wave, the sweep wave, and the pseudo-noise signal, in which the time difference can be specified. However, in the writable optical disk, the laser beam is modulated to an extent in which the recording and erase are not generated. A waveform generating unit 210a generates delay-time measurement signal for the waveform, such as the pulse wave, the sweep wave, and the pseudo-noise signal, in which the time difference can be specified. The control unit 210 controls the LD driver 108 with the generated delay-time measurement signal to modulate the LD drive current.

(c2) The light-reception elements 101a to 101d output the photodetection signals to the corresponding signal lines respectively.

(c3) A detector 400 receives the photodetection signal outputted from a divided light-reception unit 101, and outputs the detected timing to a delay amount computing unit 500.

(c4) The delay amount computing unit 500 measures the time differences in the detected timing. The delay amount computing unit 500 computes the times to be delayed such that the delay times of other signal lines coincide with the delay time of the signal line through which the photodetection signal of latest arrival is transmitted. The delay amount computing unit 500 outputs the computation result as the delay-time command values to delay-time variable circuits 600a to 600d. The delay-time command value, which is outputted to the delay-time variable circuit connected to the signal line of the latest-arrival photodetection signal, becomes the shortest delay time (zero or more) when compared with the delay-time command values outputted to other delay-time variable circuits.

(c5) When the delay time setting is finished, the control unit 210 controls the LD driver 108 to superpose the high frequency to the laser drive signal, and waits a reproduction command or a recording command.

The signal propagation delay times from the light-reception elements 101a to 101d to the tracking error signal generating circuit 114 can be caused to coincide with one another through the above operations.

In the third embodiment, it is not necessary that the switch and the signal generator are arranged directly behind the divided light-reception unit 101. Therefore, the system configuration is simplified when compared with the first embodiment. Further, the circuit which modulates the laser beam output is required in recording the information in the optical disk 100. Therefore, as with the second embodiment, the dedicated circuit is not required for the LD driver 108 in the optical disk apparatus of the third embodiment, which simplifies the system configuration.

The propagation delay times from the light-reception elements 101a to 101d to the tracking error signal generating circuit 114 are caused to coincide with one another. Therefore, the phase difference signal caused by the propagation time difference is not generated in a phase comparator 105 in the tracking error signal generating circuit 114, which allows the distortion of the tracking error signal caused by the propagation time difference to be suppressed. Accordingly, the track servo can stably be performed to obtain the high-quality reproduction signal even in the high bit rate.

Then, a fourth embodiment of the invention will be described. The fourth embodiment has a feedback loop type configuration in which the order of the delay-time variable circuit and the detector is reversed.

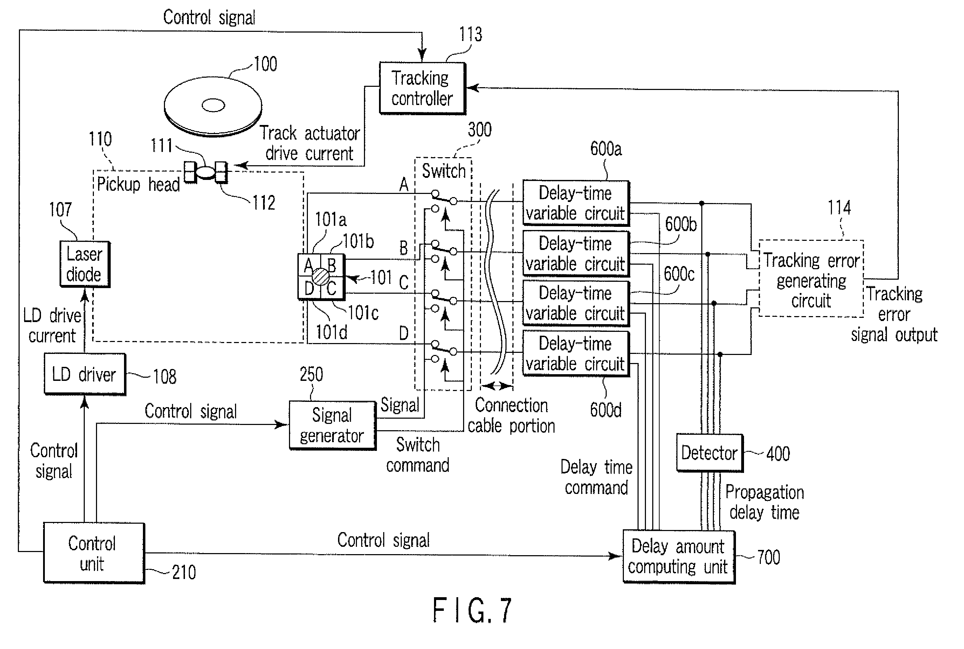

FIG. 7 is a block diagram showing a tracking error signal generating circuit according to the fourth embodiment of the invention. In the forth embodiment, the order of the delay-time variable circuit and the detector, shown in FIG. 1A (first embodiment), is reversed.

In FIG. 7, the same component as for FIG. 1A (first embodiment) is indicated by the same name and the same reference numeral, so that the description will be omitted.

Even if the delay amount computing unit directs the same delay-time command value to the plural delay-time variable circuits, the actual delay times often vary due to variations in characteristics of delay-time variable circuits 600a to 600d. Therefore, the method which is independent of the variations in the delay-time variable circuits is shown in the fourth embodiment.

In order to cause the propagation delay times from light-reception elements 101a to 101d to a tracking error signal generating circuit 114 to coincide with one another, the following processes are performed before starting the reproduction of an optical disk 100.

(d1) A control unit 200 changes the input of a switch 300 to a signal generator 250 side. According to the command of the control unit 200, a delay amount computing unit 700 sets the delay-time command value outputted to the delay-time variable circuits 600a to 600d at the minimum settable delay time.

(d2) The control unit 200 controls the signal generator 250 to simultaneously output the measurement signals to the signal lines corresponding to the light-reception elements 101a to 101d. The measurement signal has the waveform, such as the pulse wave, the sweep wave, and the pseudo-noise signal, in which the time difference can be specified.

(d3) A detector 400 receives the signal outputted from the signal generator 250, and outputs the detected timing to the delay amount computing unit 700.

(d4) The delay amount computing unit 700 measures the time differences in the detected timing, and determines the light-reception element corresponding to the latest-arrival photodetection signal.

(d5) The delay amount computing unit 700 computes the times to be delayed such that the delay time difference between the latest-arrival photodetection signal and other photodetection signals becomes as small as possible, and the delay amount computing unit 700 outputs delay-time command values to the delay-time variable circuits 600a to 600d.

(d6) When the delay time setting is finished, the control unit 200 changes the switch 300 from the signal generator 250 to a divided light-reception unit 101 side to stop the output from the signal generator 250.

Thus, the fourth embodiment forms a kind of feedback loop which decreases the delay time difference between the output signals of the delay-time variable circuits. Accordingly, correction of the delay time difference can be performed independently of a gain error for the detected delay time of the detector 400 and an offset error and the gain error for the delay-time command value of the delay-time variable circuit.

In the second and third embodiments, it is also possible to form the similar feedback loop type configuration in which the delay time difference is measured between the output signals of the delay-time variable circuits and the delay time is corrected based on the delay time difference.

The propagation delay times from the light-reception elements 101a to 101d to the tracking error signal generating circuit 114 are caused to coincide with one another. Therefore, the phase difference signal caused by the propagation time difference is not generated in a phase comparator 105 in the tracking error signal generating circuit 114, which allows the distortion of the tracking error signal caused by the propagation time difference to be suppressed.

Accordingly, the track servo can stably be performed to obtain the high-quality reproduction signal even in the high bit rate.

Then, a fifth embodiment of the invention will be described. In the fifth embodiment, RF system transmission characteristics are improved by the same method as the above embodiments.

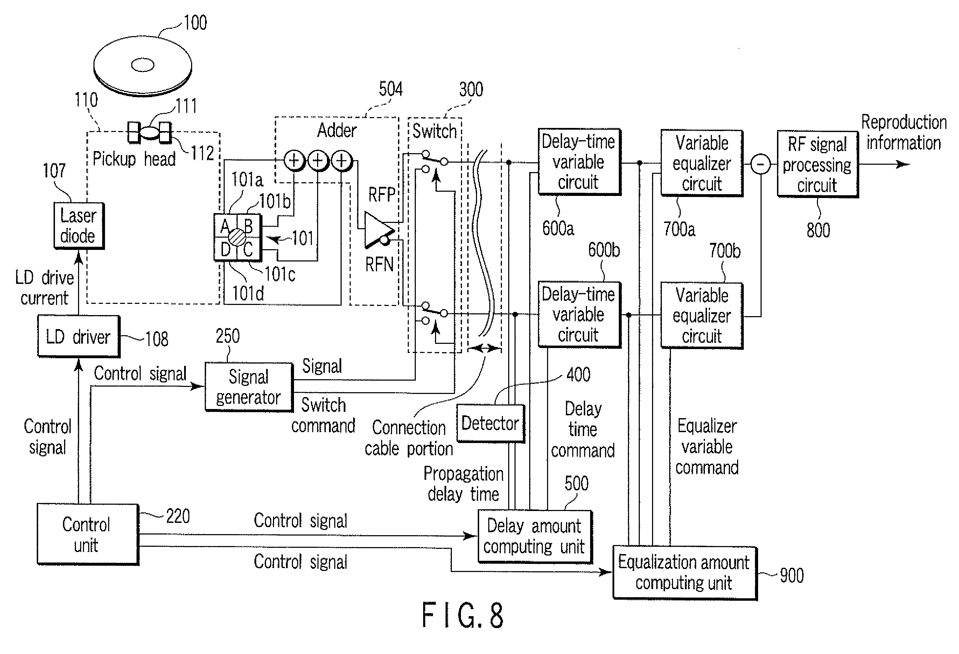

FIG. 8 is a block diagram showing an RF signal compensating circuit according to the fifth embodiment of the invention. In FIG. 8, the same component as for FIG. 1A is indicated by the same name and the same reference numeral, so that the description will be omitted.

The photodetection signals outputted from light-reception elements 101a to 101d are added by an adder 504 to form an RF signal, and the RF signal is transmitted to an RF signal processing circuit 800 through a switch 300 arranged near a divided light-reception unit 101, delay-time variable circuits 600a and 600b, and variable equalizer circuits 700a and 700b.

The variable equalizer circuits 700a and 700b are the filters in which frequency transmission characteristics are changed by the command from an equalization amount computing unit 900. The RF signal processing circuit 800 extracts binarized digital data which is the reproduction information from the obtained reproduction signal.

Usually balanced transmission is performed to the RF signal in order to maintain its signal quality. The signals of the balanced transmission are referred to as RFP signal and RFN signal. Usually, in the RF signal processing circuit, the signal to which the balanced transmission is performed is converted into an unbalanced signal by computing the difference between the RFP signal and the RFN signal. Therefore, when the delay times of the two signals to which the balanced transmission is performed or the frequency characteristics of the signal lines (transmission lines) differ from each other, the distortion is generated in computing the difference.

In the fifth embodiment, before starting the reproduction of an optical disk 100, the following processes are performed in order to cause the RFP signal and the RFN signal to coincide with each other in the propagation characteristics from the adder 504 to the RF signal processing circuit 800.

(e1) A control unit 220 changes the input of the switch 300 to a signal generator 250 side.

(e2) The control unit 220 controls the signal generator 250 to simultaneously output the measurement signals to the RFP signal and the RFN signal. The measurement signal has the waveform, such as the pulse wave, the sweep wave, and the pseudo-noise signal, in which the time difference or the frequency characteristics can be specified.

(e3) A detector 400 receives the signal outputted from the signal generator 250, and outputs the detected timing to a delay amount computing unit 500. In order to obtain frequency spectrum information, the delay-time variable circuits output the signals to the equalization amount computing unit 900.

(e4) The delay amount computing unit 500 measures the time differences in the detected timing. The delay amount computing unit 500 computes the times to be delayed such that the delay times of the other signal lines coincide with the delay time of the latest-arrival signal, and the delay amount computing unit 500 outputs delay-time command values to the delay-time variable circuits 600a to 600d.

The delay-time command value, which is outputted to the delay-time variable circuit connected to the signal line of the latest-arrival signal, becomes the shortest delay time (zero or more) when compared with the delay-time command values outputted to other delay-time variable circuits. On the other hand, the equalization amount computing unit 900 determines the transmission frequency characteristics of the transmission paths of the RFP signal and the RFN signal, which are delayed by the delay-time variable circuits 600a and 600b. The equalization amount computing unit 900 computes and outputs filter coefficients of the variable equalizer circuits 700a and 700b such that the frequency characteristics of the transmission lines of the RFP signal and the RFN signal are brought close to the frequency characteristics of a predetermined transmission path model.

(e5) The control unit 220 changes the switch 300 from the signal generator 250 to the divided light-reception unit 101.

The propagation times of the RFP signal and the RFN signal coincide with each other from the adder 504 to the RF signal processing circuit 800 by performing the above processes, so that the signal distortion generated by discrepancy of the propagation characteristics is suppressed. Further, proper adjustment of a variable equalizer suppresses propagation distortion generated by inadequacy of the signal-line propagation frequency characteristics, which allows the high-quality reproduction signal to be obtained even in the high bit rate.

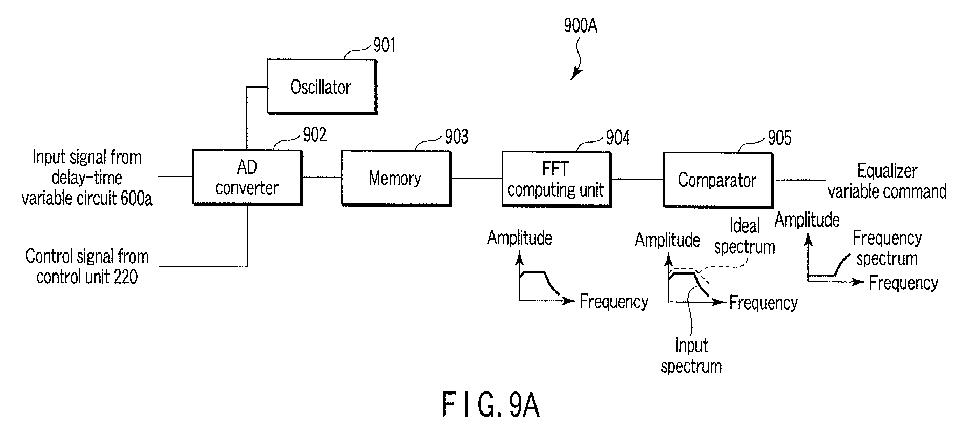

FIG. 9A shows an equalization amount computing unit 900A as a configuration example of the equalization amount computing unit 900 of FIG. 8.

The signal inputted from the delay-time variable circuit 600a is inputted to an A/D converter 902. The A/D converter 902 is operated under the control of the control unit 220 only when the signal is outputted from the signal generator 250, and the A/D converter 902 performs the A/D conversion at constant intervals by the signal from an oscillator 901 to store the A/D conversion value in a memory 903.

An FFT computing unit 904 performs fast Fourier transform (FFT) to the data read from the memory 903, and outputs the frequency spectrum of the inputted signal to the equalization amount computing unit 900. A comparator 905 compares the ideal frequency spectrum, stored in the comparator 905, to the frequency spectrum outputted from the FFT computing unit 904 to output the difference of the comparison.

The ideal frequency spectrum is the desirable frequency spectrum in which the signal outputted from the signal generator 250 is received by the delay-time variable circuit 600a. Therefore, the difference between the frequency spectrum of the inputted signal and the ideal frequency spectrum is the frequency component which is distorted by the connection cable. The frequency spectrum difference indicates the frequency characteristics which should be corrected by the variable equalizer circuit 700. Accordingly, the frequency spectrum difference is outputted as an equalizer variable command to the variable equalizer circuit 700a.

Particularly in the case where the variable equalizer circuit is the band-pass filter or the high-pass filter or a high-frequency enhancing filter, which can adjust two variables of a characteristic frequency and a boost amount, the equalization amount computing unit 900A computes the characteristic frequency and the boost amount from the frequency spectrum difference to determine that the characteristic frequency and the boost amount are the equalizer variable command.

The signal, such as a pseudo-white noise signal, the chirp signal, and the impulse signal, which becomes the even frequency spectrum in performing observation within the predetermined time is preferable as the signal outputted from the signal generator 250.

It is also possible that the ideal spectrum information stored in the comparator 905 is changed by the control signal from the control unit 220 according to the signal outputted from the signal generator 250.

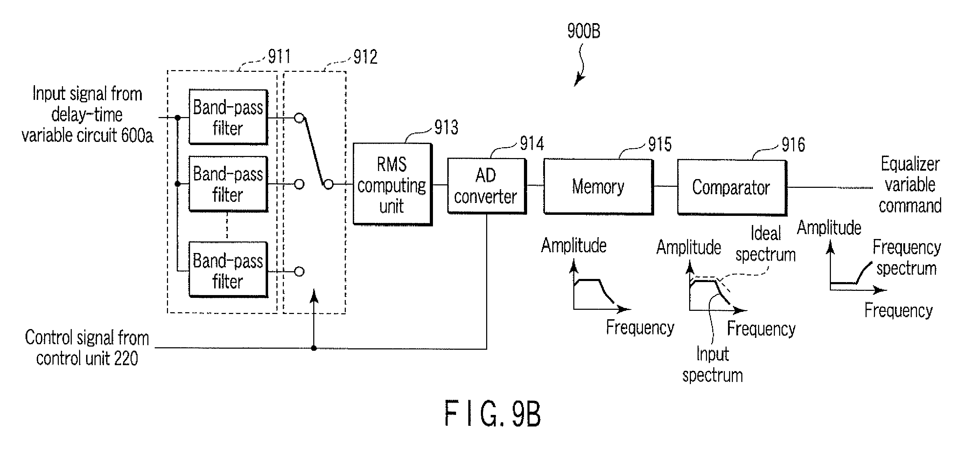

FIG. 9B shows an equalization amount computing unit 900B as a configuration example of the equalization amount computing unit 900 of FIG. 8.

The signal inputted from the delay-time variable circuit 600a is inputted to a filter bank 911. In the filter bank 911, the band-pass filters having the different bands are arranged. The frequency component is extracted in each band from each filter. The output of the filter bank 911 passes through an RMS computing unit 913 in each band, and the output is converted into a magnitude of amplitude value in each band.

Under the control of the control unit 220, a selector 912 is changed in synchronization with the signal outputted from the signal generator 250, and the selector 912 transmits the amplitude magnitude to an A/D converter 914 in each band. Based on the control signal from the control unit 220, the A/D converter 914 performs the A/D conversion to the amplitude magnitude, which is inputted in each band from the selector 912 in synchronization with the signal outputted from the signal generator 250, and the A/D converter 914 stores the data in a memory 915. The data stored in the memory 915 in the above manner indicates the frequency characteristics of the transmission path from the signal generator 250 to the equalization amount computing unit 900.

A comparator 916 compares the ideal frequency characteristics, stored in the comparator 916, to the frequency characteristics latched in the memory 915 to output the difference of the comparison. The ideal frequency characteristics are the desirable frequency characteristics in the transmission path through which the signal outputted from the signal generator 250 is received by the equalization amount computing unit 900. Therefore, the difference between the frequency characteristics of the inputted signal and the ideal frequency characteristics is the frequency component which is distorted by the connection cable. Since the frequency characteristics difference indicates the frequency characteristics which should be corrected by the variable equalizer circuit 700, the comparator 916 outputs the frequency characteristics difference as the equalizer variable command to the variable equalizer circuit 700a.

Particularly in the case where the variable equalizer circuit is the band-pass filter or the high-pass filter or a high-frequency enhancing filter, which can adjust two variables of the characteristic frequency and the boost amount, the characteristic frequency and the boost amount are computed from the frequency spectrum difference, and the characteristic frequency and the boost amount are set at the equalizer variable command.

It is also possible that the ideal spectrum information stored in the comparator 916 is changed by the control signal from the control unit 220 according to the signal outputted from the signal generator 250.

As described above, in the fifth embodiment, it is thought that the modifications to the first embodiment could be made like the second to fourth embodiments. Namely, in the fifth embodiment, the signal generator 250 is separately provided as the signal source for measuring the delay time characteristics or the frequency characteristics, and it is also possible to use the method of changing the laser beam output emitted from the LD 107 and the method of controlling the LD driver 108 to decrease the frequency of the high-frequency superposition.

Further, in the case where the order of the detector 400 and the delay-time variable circuits 600a and 600b or the variable equalizer circuits 700a and 700b is inverted to form the feedback loop mode, it is also possible to use the method of changing the laser beam output emitted from the LD 107 and the method of controlling the LD driver 108 to decrease the frequency of the high-frequency superposition.

Thus, in accordance with the invention, the signal distortion, caused by the propagation time difference from the difference in group delay characteristics and the frequency characteristics difference, is compensated by the means for compensating the propagation characteristics in the path from the light-reception element to the signal processing circuit. Therefore, the tracking error signal generation and the RF signal processing become possible, and high-quality reproduction signal can be obtained even in the high bit rate.

The above descriptions are the embodiments of the invention. The descriptions do not limit the apparatus and method of the invention, but various changes and modifications could be made. Such changes and modifications should be included in the invention. Further, the apparatus and method configured by appropriately combining the constituents, the functions, features, and the process steps in the embodiments should also be included in the invention.

**Claims**

1. An optical disk apparatus **characterized by** comprising:

   an optical pickup (110) which irradiates an optical disk with a laser beam, and which has a light-reception unit including a first light-reception element and a second light-reception element, the light-reception unit receiving the laser beam reflected from the optical disk to provide a first photodetection signal and a second photodetection signal corresponding to the reflected laser beam;
   measuring units (400, 500) which receive the first and second photodetection signals from the optical pickup to measure propagation delay time difference between the first and second photodetection signals;
   a delay unit (600) which delays the first and second photodetection signals based on the signal propagation delay time difference such that delay times of the first and second photodetection signals are equalized to each other; and

a signal processing circuit (114) which processes the first and second photodetection signals delayed by the delay unit, and provides the processed signals.

2. The optical disk apparatus according to claim 1, **characterized in that** the optical pickup (110) includes an objective lens which focuses the laser beam and a tracking actuator (112) which moves the objective lens in a disk radial direction such that the laser beam focused by the objective lens traces a track formed on the rotating optical disk, the signal processing circuit (114) includes a tracking error generating circuit which generates a tracking error signal based on the first and second photodetection signals delayed by the delay unit (600), and

the optical disk apparatus further comprises a tracking control unit which controls the tracking actuator (112) based on the tracking error signal.

3. The optical disk apparatus according to claim 1, **characterized by** further comprising:

a signal generating circuit (250) which generates a measurement signal used for measurement of the measuring unit (400);

a selection unit (300) which is provided directly behind the first and second light-reception elements of the optical pickup (110), selects one of the first and second photodetection signals and the measurement signal, the first and second photodetection signals being provided from the first and second light-reception elements, and provides the selected signal to the delay unit; and

a control unit (200) which provides a control signal to the selection unit (300) such that the selection unit selects the measurement signal during the measurement of the measuring unit (400).

4. The optical disk apparatus according to claim 3, **characterized in that** the measuring unit (400) binarizes a signal received from the signal generating circuit (250), and detects time difference between the time when the signal is generated from the signal generating circuit and a time when the binarized signal is detected.

5. The optical disk apparatus according to claim 1, **characterized in that** the measuring unit (400) comprises:

a cross-correlation determining unit (420) which determines cross-correlation between the signal from the signal generating circuit and an ideal signal to be generated by the signal generating circuit, and outputs a signal indicating the cross-correlation;

a binarization unit (430) which binarizes the output signal of the cross-correlation determining unit; and

a unit which provides the signal propagation delay time difference based on an output signal of the binarization unit and signal generation timing of the signal generating circuit.

6. The optical disk apparatus according to claim 3, **characterized in that** the signal generating circuit (250) comprises:

a memory (251) which stores a signal waveform;

a read unit (252) which generates address information to sequentially read data stored in the memory (251); and

a D/A converter (254) which performs digital-to-analog conversion to the data read from the memory.

7. The optical disk apparatus according to claim 1, **characterized in that** the delay unit (600) comprises:

a delay line (622) which has a plurality of output taps; and

a selection unit which selects one of the plurality of taps based on the signal propagation delay time difference, and provides the photodetection signal delayed from the selected tap.

8. The optical disk apparatus according to claim 1, **characterized in that** the delay unit (600) comprises a delay-time variable circuit (630) in which a charge coupled device (643) is used.

9. The optical disk apparatus according to claim 3, **characterized in that** the delay unit (600) comprises:

an A/D converter (651) which performs A/D conversion to the photodetection signal;

a shift register (652) which stores the data converted by the A/D converter, and shifts the stored data based on clock signals having a predetermined period; and

a selection unit (653) which selects one register in the shift register based on the signal propagation delay time difference, and supplies a charge stored in the selected resister.

10. The optical disk apparatus according to claim 1, wherein the delay unit (600) comprises a delay-time variable circuit (660) in which an all range pass filter (671) is used.

11. The optical disk apparatus according to claim 1, **characterized by** further comprising:

a laser drive unit (108) which supplies drive current to a semiconductor laser, the semiconductor laser emitting the laser beam;
a high-frequency superposing unit (108a) which superposes a high-frequency signal to the drive current during information reproduction of the optical disk; and
a control unit (210) which controls the high-frequency superposing unit such that a frequency of the high-frequency signal is decreased during the measurement of the measuring unit (400).

12. The optical disk apparatus according to claim 1, **characterized by** further comprising:

a laser drive unit (108) which supplies drive current to a semiconductor laser, the semiconductor laser emitting the laser beam; and
a unit (210a) which modulates the drive current with the measurement signal to change outgoing power of the semiconductor laser during the measurement of the measuring unit (400).

13. An optical disk apparatus **characterized by** comprising:

an optical pickup (110) which irradiates an optical disk with a laser beam, and which has a light-reception unit including a first light-reception element and a second light-reception element, the light-reception unit receiving the laser beam reflected from the optical disk to provide a first photodetection signal and a second photodetection signal corresponding to the reflected laser beam;
measuring units (400) and (500) which receive the first and second photodetection signals from the optical pickup to measure propagation delay time difference between the first and second photodetection signals;
a delay unit (600) which delays the first and second photodetection signals based on the signal propagation delay time difference such that delay times of the first and second photodetection signals are equalized to each other;
a characteristics determining unit (900) which determines transmission frequency characteristics of transmission paths of the first and second photodetection signals from the first and second photodetection signals delayed by the delay unit (600);
variable equalizers (700a) and (700b) which change frequency transmission characteristics according to the transmission characteristics determined by the characteristics determining unit, and correct the first and second photodetection signals delayed by the delay unit; and
a signal processing circuit (800) which extracts binarized data which is reproduction information from the first and second photodetection signals corrected by the variable equalizers.

14. The optical disk apparatus according to claim 13, **characterized by** further comprising:

a signal generating circuit (250) which generates a measurement signal used for measurement of the measuring unit;
a selection unit (300) which is provided directly behind the first and second light-reception elements of the optical pickup, selects one of the first and second photodetection signals and the measurement signal, the first and second photodetection signals being provided from the first and second light-reception elements, and provides the selected signal to the delay unit; and
a control unit (220) which provides a control signal to the selection unit such that the selection unit selects the measurement signal during the measurement of the measuring unit.

15. The optical disk apparatus according to claim 13, **characterized by** further comprising:

a laser drive unit (108) which supplies drive current to a semiconductor laser, the semiconductor laser emitting the laser beam;
a high-frequency superposing unit (108a) which superposes a high-frequency signal to the drive current during information reproduction of the optical disk; and

a control unit (210) which controls the high-frequency superposing unit such that a frequency of the high-frequency signal is decreased during the measurement of the measuring unit.

16. The optical disk apparatus according to claim 13, **characterized by** further comprising:

a laser drive unit (108) which supplies drive current to a semiconductor laser, the semiconductor laser emitting the laser beam; and

a unit (210a) which modulates the drive current with the measurement signal to change outgoing power of the semiconductor laser during the measurement of the measuring unit.

17. A method of processing a photodetection signal in an optical disk apparatus, the method **characterized by** comprising:

irradiating an optical disk with a laser beam to receive the laser beam reflected from the optical disk with a light-reception unit including a first light-reception element and a second light-reception element, and providing a first photodetection signal and a second photodetection signal which correspond to the reflected laser beam;

receiving the first and second photodetection signals to measure propagation delay time difference between the first and second photodetection signals;

delaying the first and second photodetection signals based on the signal propagation delay time difference such that delay times of the first and second photodetection signals are equalized to each other; and

processing the delayed first and second photodetection signals to provide the processed signals.

18. A method of processing a photodetection signal in an optical disk apparatus, the method **characterized by** comprising:

irradiating an optical disk with a laser beam to receive the laser beam reflected from the optical disk with a light-reception unit including a first light-reception element and a second light-reception element, and providing a first photodetection signal and a second photodetection signal which correspond to the reflected laser beam;

receiving the first and second photodetection signals to measure propagation delay time difference between the first and second photodetection signals;

delaying the first and second photodetection signals based on the signal propagation delay time difference such that delay times of the first and second photodetection signals are equalized to each other;

determining transmission frequency characteristics of transmission paths of the first and second photodetection signals from the delayed first and second photodetection signals;

changing frequency transmission characteristics of variable equalizers according to the determined transmission frequency characteristics;

correcting the delayed first and second photodetection signals with the variable equalizers; and

extracting binarized data which is reproduction information from the first and second photodetection signals corrected by the variable equalizers.

F I G. 1A

EP 1 643 496 A2

FIG. 1B

EP 1 643 496 A2

(From control unit 200)                                    410

Input signal
(from switch)

401

A/D
converter

402

Oscillator    403

Cross-correlator    404

Peak position determining unit    405

Propagation delay time
(to delay amount
computing unit 500)

Time difference detector

411
Time difference detector

412
Time difference detector

413
Time difference detector

400A

F I G. 2A

(From control unit 200)

450

Time difference detector

420    430         Stop    440    Reset
                   signal          signal    Propagation delay time
Input signal                                 (to delay amount
(from switch 300)                            computing unit 500)

Convolver    Binarization    Stop    Time difference
             unit            signal  measuring
                                     instrument

Time difference detector  ----451

Time difference detector  ----452

400B

Time difference detector  ----453

F I G. 2B

EP 1 643 496 A2

(From control unit 200)

460

**Time difference detector**

430

Reset
signal

Input signal
(from switch 300)

Stop
signal

440

Propagation delay time
(to delay amount
computing unit 500)

Binarization
unit

Time difference
measuring
instrument

461

Time difference detector

462

Time difference detector

400C

463

Time difference detector

FIG. 2C

440A

Stop signal

444

S/H

441
442
443

Propagation
delay-time output

Reset signal

F I G. 3A

440B

Stop signal

445

Reset signal → Counter → Propagation
delay-time output

446

Oscillator

F I G. 3B

250

254

251 — memory

D/A → Output signal
(to switch 300)

Control signal → Address generator — 252

Oscillator — 253

F I G. 4

610

Input signal
(from switch 300)

622

Delay-time
command value
(from delay-time
computing unit 500)

611

612

633

61m

Decoder

621

61n

624

Output signal
(to tracking
error generating
circuit 114)

F I G. 5A

630

645

Input signal
(from switch 300)

642

V/I

Oscillator

Delay-time
command value
(from delay-time
computing unit 500)

631

632

CCD

643

63m

Decoder

641

63n

646

Output signal
(to tracking
error generating
circuit 114)

F I G. 5B

650

654

Oscillator

Input signal
(from switch 300)

651

A/D

652

Delay-time command value
(from delay-time computing unit 500)

Selector

653

Output signal
(to tracking
error generating
circuit 114)

F I G. 5C

660

671

Input signal
(from switch 300)

All range
pass filter

Output signal
(to tracking
error generating
circuit 114)

Delay-time command value
(from delay-time computing unit 500)

Decoder

672

F I G. 5D

F I G. 6

EP 1 643 496 A2

F I G. 7

EP 1 643 496 A2

F I G. 8

EP 1 643 496 A2

EP 1 643 496 A2

F I G. 9A

FIG. 9B

EP 1 643 496 A2